# FASCICULE DE BREVET EUROPEEN

(11) **EP 0 648 170 B1**
(45) Date de publication et mention de la délivrance du brevet: **03.01.1996**
(21) Numéro de dépôt: 93913119.9
(22) Date de dépôt: 14.06.1993
(51) Int. Cl.: B60T 13/565, B60T 13/575

(54) **DISPOSITIF DE TRANSMISSION D'EFFORT A APPUI PLAN**
KRAFTÜBERTRAGUNGSVORRICHTUNG MIT FLACHEM STÜTZPUNKT
FORCE TRANSMISSION DEVICE WITH PLANE CONTACT FACE

(30) Priorité: 08.07.1992 FR 9208420
(43) Date de publication de la demande: 19.04.1995
(73) Titulaire: BENDIX EUROPE Services Techniques, F-93700 Drancy (FR)
(72) Inventeur: GAUTIER, Jean Pierre, F-93600 Aulnay-sous-Bois (FR); VERBO, Ulysse, F-93600 Aulnay-sous-Bois (FR); PEREZ REVILLA, Miguel, F-95100 Argenteuil (FR)
(74) Mandataire: Bentz, Jean-Paul
(86) Numéro de dépôt international: FR9300563
(87) Numéro de publication internationale: WO9401312

(56) Documents cités:
- GB-A- 2 088 981
- US-A- 3 543 298

## Description

La présente invention concerne un dispositif de transmission d'effort pour un ensemble composé d'un servomoteur pneumatique d'assistance au freinage et d'un maître-cylindre, comprenant :
- une tige de commande susceptible, à partir d'une position de repos, de subir un déplacement suivant une direction axiale sous l'effet d'un effort d'entrée, cette tige étant terminée par un palpeur ;
- un piston pneumatique mobile suivant cette direction axiale, depuis une position de repos, sous l'effet d'une différence de pression commandée par le déplacement axial de la tige de commande, ce piston pneumatique présentant une surface annulaire axiale qui entoure le palpeur ;
- un disque de réaction logé dans une coupelle à fond plat et présentant une face libre sur laquelle la surface annulaire axiale dudit piston pneumatique et le plongeur sont susceptibles d'appliquer des efforts de sortie ;
- une tige de poussée sensiblement axiale dont une première extrémité reçoit ces efforts de sortie et dont une autre extremité les retransmet à un piston hydraulique du maître-cylindre ; et
- des moyens de maintien pour assurer que la tige de poussée conserve une direction sensiblement axiale.

Un tel dispositif est par exemple décrit dans le brevet US 4 984 506 et bien connu dans l'art antérieur.

De façon générale, les servomoteurs d'assistance au freinage et les maîtres-cylindres qui y sont associés sont construits en grande série et sont pour cette raison soumis à des compromis très délicats sur le plan du coût et de la précision de fabrication.

Ceci conduit en particulier à des difficultés importantes dans l'obtention d'un alignement parfait de la tige de poussée avec la tige de commande, sans lequel des déformations sous contrainte, suivies d'un endommagement irréversible du servomoteur peuvent apparaître.

Le but de la présente invention est de proposer des moyens simples et économiques pour éviter les conséquences dommageables d'un tel défaut d'alignement parfait.

A cette fin, le dispositif de l'invention est essentiellement caractérisé en ce que la tige de poussée est solidaire, à sa première extrémité, d'une rondelle de poussée plane venant en appui, avec la possibilité d'un glissement relatif, contre le fond plat de ladite coupelle, et en ce que lesdits moyens de maintien sont portés par le maître-cylindre.

Dans le cas où le piston hydraulique du maître-cylindre présente un alésage cylindrique axial dans lequel pénètre la seconde extrémité de la tige de poussée, lesdits moyens de maintien comprennent de préférence une restriction du diamètre interne de cet alésage, propre à limiter la possibilité pour la tige de poussée de s'écarter de ladite direction axiale.

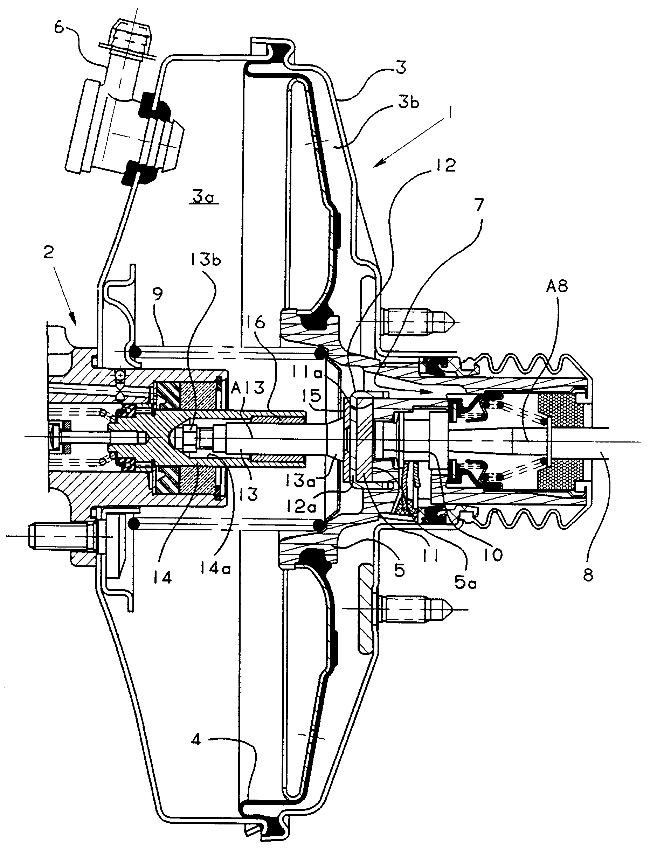

D'autres caractéristiques et avantages de l'invention ressortiront clairement de la description qui en est faite ci-après, à titre indicatif et nullement limitatif, en référence à sa figure unique qui est une vue en coupe partielle d'un dispositif conforme à l'invention.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une membrane 4 solidaire d'un piston pneumatique 5 mobile à l'intérieur de l'enveloppe.

La chambre avant 3a, dont la face avant est fermée de façon étanche par le maître-cylindre 2, est en permanence raccordée à une source de dépression (non représentée) à travers un raccord 6.

La pression dans la chambre arrière 3b est contrôlée par un clapet 7, commandé par une tige de commande 8, laquelle est reliée à la pédale de frein.

Lorsque la tige de commande 8 est en position de repos, en l'occurrence tirée vers la droite, le clapet 7 établit une communication entre les deux chambres 3a et 3b du servomoteur.

La chambre arrière 3b étant alors soumise à la même dépression que la chambre avant 3a, le piston 5 est repoussé vers la droite, en position de repos, par un ressort 9.

L'actionnement de la tige de commande 8 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique.

La différence de pression entre les deux chambres alors ressentie par la membrane 4 exerce sur le piston 5 une poussée qui tend à le déplacer vers la gauche en comprimant le ressort 9.

L'effort de freinage qu'exerce, par l'intermédiaire d'un plongeur 10, la tige de commande 8 à destination du maître-cylindre, et l'effort d'assistance au freinage résultant de la poussée du piston 5, sont appliqués sur la face amont (droite) 11a d'un disque de réaction 11 logé dans une coupelle 12 propre à retransmettre ces efforts à une tige de poussée 13, laquelle a pour fonction d'actionner un piston hydraulique 14 du maître-cylindre.

L'invention concerne essentiellement la chaîne de transmission d'effort que constituent ensemble la tige de commande 8, le plongeur 10, le piston 5, le disque de réaction 11, la coupelle 12, la tige de poussée 13 et le piston hydraulique 14.

Comme le montre la Figure, le piston 5 appuie sur le disque de réaction 11 par une surface annulaire axiale 5a qui entoure le palpeur 10.

La coupelle 12 est de forme essentiellement cylindrique et présente un fond plat 12a, perpendiculaire à l'axe longitudinal A8 de la tige de commande, et sur toute la face interne duquel s'appuie le disque de réaction 11.

Selon l'invention, la tige de poussée 13 est, à une première de ses extrémités 13a, solidaire d'une rondelle de poussée plane 15 perpendiculaire à l'axe longitudinal A13 de la tige de poussée 13 et venant en appui, avec la possibilité d'un glissement relatif, contre le fond plat 12a de la coupelle 12, et des moyens de maintien sont prévus sur le maître-cylindre 2 pour assurer que l'axe longitudinal A13 de cette tige de poussée 13 reste sensiblement parallèle à l'axe longitudinal A8 de la tige de commande 8.

Comme généralement le piston hydraulique 14 du maître-cylindre comporte un alésage cylindrique axial 14a dans lequel pénètre la seconde extrémité 13b de la tige de poussée 13, les moyens de maintien peuvent prendre la forme d'un manchon 16 introduit dans l'alésage 14a pour en restreindre le diamètre interne à une valeur à peine supérieure à celle du diamètre externe de la tige de poussée 8, de manière à limiter la possibilité pour cette dernière de prendre une position dans laquelle les directions des axes A8 et A13 soient très différentes.

Grâce à cette disposition, les efforts appliqués par la tige de commande 8 et le piston pneumatique 5 vers le piston hydraulique 14 tendent à orienter les axes A8 et A13 parallèlement l'un à l'autre, même lorsque ces derniers présentent un léger décalage qui les empêche d'être rigoureusement confondus.

## Revendications

1. Dispositif de transmission d'effort pour un ensemble composé d'un servomoteur pneumatique d'assistance au freinage (1) et d'un maître-cylindre (2), comprenant :
- une tige de commande (8) susceptible, à partir d'une position de repos, de subir un déplacement suivant une direction axiale sous l'effet d'un effort d'entrée, cette tige étant terminée par un palpeur (10) ;
- un piston pneumatique (5) mobile suivant cette direction axiale, depuis une position de repos, sous l'effet d'une différence de pression commandée par le déplacement axial de la tige de commande, ce piston pneumatique présentant une surface annulaire axiale (5a) qui entoure le palpeur ;
- un disque de réaction (11) logé dans une coupelle (12) à fond plat (12a) et présentant une face libre (11a) sur laquelle la surface annulaire axiale dudit piston pneumatique et le plongeur sont susceptibles d'appliquer des efforts de sortie ;
- une tige de poussée (13) sensiblement axiale dont une première extrémité (13a) reçoit ces efforts de sortie et dont une autre extrémité (13b) les retransmet à un piston hydraulique (14) du maître-cylindre ; et
- des moyens de maintien (14a, 16) pour assurer que la tige de poussée conserve une direction sensiblement axiale,
caractérisé en ce que la tige de poussée (13) est solidaire, à sa première extrémité (13a), d'une rondelle de poussée plane (15) venant en appui, avec la possibilité d'un glissement relatif, contre le fond plat (12a) de ladite coupelle, et en ce que lesdits moyens de maintien sont portés par le maître-cylindre (2).

2. Dispositif suivant la revendication 1, caractérisé en ce que, le piston hydraulique du maître-cylindre présentant un alésage cylindrique axial (14a) dans lequel pénètre la seconde extrémité de la tige de poussée, lesdits moyens de maintien comprennent une restriction (16) du diamètre interne de cet alésage, propre à limiter la possibilité pour la tige de poussée de s'écarter de ladite direction axiale.

## Claims

1. Force transmission device for an assembly consisting of a pneumatic brake-booster (1) and of a master cylinder (2), comprising:
- a control rod (8) capable, starting from a resting position, of undergoing a movement in an axial direction under the effect of an input force, this rod being terminated by a probe (10);
- a pneumatic piston (5) movable in this axial direction, from a resting position, under the effect of a pressure differential controlled by the axial movement of the control rod, this pneumatic piston having an axial annular surface (5a) which surrounds the probe;
- a reaction disk (11) housed in a cup (12) with flat bottom (12a) and having a free face (11a) onto which the axial annular surface of said pneumatic piston and the plunger are capable of applying output forces;
- a substantially axial thrust rod (13) a first end (13a) of which receives these output forces and another end (13b) of which retransmits them to a hydraulic piston (14) of the master cylinder; and
- retaining means (14a, 16) for ensuring that the thrust rod maintains a substantially axial direction,
characterized in that the thrust rod (13) is securely attached, at its first end (13a), to a flat thrust washer (15) coming to bear, with the possibility of a relative sliding, against the flat bottom (12a) of said cup, and in that said retaining means are borne by the master cylinder (2).

2. Device according to Claim 1, characterized in that, the hydraulic piston of the master cylinder having an axial cylindrical bore (14a) into which the second end of the thrust rod enters, said retaining means comprise a restriction (16) of the internal diameter of this bore, adapted to limit the possibility of the thrust rod deviating from said axial direction.

## Patentansprüche

1. Kraftübertragungsvorrichtung für eine Baugruppe, die aus einem pneumatischen Bremsunterstützungs-Servomotor (1) und einem Hauptzylinder (2) besteht, mit:
- einer Steuerstange (8), die sich ausgehend von einer Ruhestellung entlang einer axialen Richtung unter der Wirkung einer Eingangskraft verstellen kann, wobei diese Stange in einem Fühler (10) endet;
- einem Pneumatikkolben (5), der entlang dieser axialen Richtung ausgehend von einer Ruhestellung unter der Wirkung einer Druckdifferenz bewegbar ist, die von der axialen Verstellung der Steuerstange gesteuert wird, wobei dieser Pneumatikkolben eine ringförmige axiale Fläche (5a) aufweist, welche den Fühler umgibt;
- einer Reaktionsscheibe (11), die in einer Kapsel (12) mit flachem Boden (12a) angeordnet ist und eine freie Seite (11a) aufweist, auf welche die ringförmige axiale Fläche des Pneumatikkolbens und der Tauchkolben Ausgangskräfte aufbringen können;
- einer im wesentlichen axialen Schubstange (13), deren eines Ende (13a) die Ausgangskräfte aufnimmt und deren anderes Ende (13b) diese auf einen Hydraulikkolben (14) des Hauptzylinders überträgt; und
- Haltemitteln (14a, 16), um zu gewährleisten, daß die Schubstange eine im wesentlichen axiale Richtung beibehält;
dadurch gekennzeichnet, daß die Schubstange (13) an ihrem ersten Ende (13a) fest mit einer flachen Schubscheibe (15) verbunden ist, die unter der Möglichkeit einer Relativbewegung an dem flachen Boden (12a) der Kapsel in Anlage gelangt, und daß die Haltemittel von dem Hauptzylinder (2) getragen werden.

2. Vorrichtung nach Anspruch 1, dadurch gekennzeichnet, daß der Hydraulikkolben des Hauptzylinders eine axiale zylindrische Bohrung (14a) aufweist, in welche das zweite Ende der Schubstange eindringt, wobei die Haltemittel eine Verengung (16) des Innendurchmessers dieser Bohrung umfassen, die geeignet ist, die Möglichkeit für die Schubstange zu begrenzen, sich von der axialen Richtung zu entfernen.
